# EUROPEAN PATENT APPLICATION

(11) **EP 4 796 701 A1**
(43) Date of publication of application: **26.08.2026**
(21) Application number: 25165351.5
(22) Date of filing: 21.03.2025
(51) Int. Cl.: D06M 11/83, A01N 25/10, A01N 25/30, A01N 43/50, A01N 59/16, D06M 13/17, D06M 15/263, D06M 15/27, D06M 15/356, D06M 16/00

(54) **AQUEOUS COMPOSITIONS HAVING IMPROVED APPLICATION FOR THE TREATMENT OF FIBERS AND ARTICLES**

(30) Priority: 21.02.2025 CN 202510202308
(71) Applicant: LANXESS Corporation, Pittsburgh, PA 15275-1112 (US)
(72) Inventor: SIANAWATI, Emerentiana, Audubon, 19403 (US); LU, Yongjun, Shanghai, 201315 (CN); Li, Zhiang, Newark, Delaware 19711 (US)
(74) Representative: Herbold, Matthias

(57) **Abstract**

Disclosed herein are aqueous compositions containing silver ion, at least one polymer having at least 10 wt% polymerized units of vinylimidazole, and at least one surfactant represented by the formula R¹-O-[CH₂CH(R²)-O]ₓ [CH₂CH₂O]_{y}-H, wherein R¹, R², x and y are as described herein. The compositions have improved application for the treatment of fibers or articles, such as textiles.

## Description

The present disclosure relates to a composition comprising silver ion and polymer material(s) having improved application for the treatment of fibers or articles, such as textiles.

Silver ions are regarded as a safe and effective antimicrobial solution for textile applications. Silver ions, however, can undesirably react with ionic components in aqueous solutions, leading to the precipitation of silver compounds. Polymer delivery systems for silver ions, such as those disclosed in US7390774B2 and US2018347107A1, help to alleviate this concern, but a need remains to address undesirable precipitation, particularly when treatment solutions contain hard water. The presently disclosed invention addresses this need via the discovery that certain surfactants are compatible with the silver-polymer materials of the present disclosure and reduce precipitation or the formation of flocculants, even in hard water environments. In addition, the compositions of the present disclosure containing the presently disclosed surfactants advantageously exhibit improved stability and foam dissipation across a wide range of pH values and water hardness levels. These features improve the application of the silver-polymer materials of the present disclosure, as well as the compositions comprising such materials under expanded processing conditions, environments, and durations.

### SUMMARY OF INVENTION

Disclosed herein is an aqueous composition comprising: (a) silver ion; (b) at least one polymer comprising at least 10 wt% polymerized units of vinylimidazole; and (c) at least one surfactant represented by the formula:

R¹-O-[CH₂CH(R²)-O]ₓ [CH₂CH₂O]_{y}-H,

wherein R¹, R², x and y are as described herein.

Also disclosed is a method of preparing a composition useful for treating fibers or an article, such as a textile, comprising combining in an aqueous medium (a) a source of silver ion, (b) at least one polymer comprising at least 10 wt% polymerized units of vinylimidazole and (c) at least one surfactant represented by the formula:

R¹-O-[CH₂CH(R²)-O]ₓ [CH₂CH₂O]_{y}-H,

wherein R¹, R², x and y are as described herein.

In a further aspect, disclosed herein is a method for treating fibers or an article, such as a textile, comprising contacting the fibers or article with a composition of the present disclosure.

It is to be understood that both the foregoing general description and the following detailed description are merely exemplary of the invention and are intended to provide an overview or framework for understanding the nature and character of the invention as it is claimed.

### DETAILED DESCRIPTION OF THE INVENTION

Unless otherwise specified, temperatures are in degrees centigrade (°C). Unless otherwise specified, all operations were performed at room temperature (20-25 °C). Amounts of polymer are on a solids basis, i.e., not including any water or solvent which may be present with the polymer. Amounts of monomer are on the basis of solid polymer. The term "vinylimidazole" (or VI) refers to N-vinylimidazole. The term "silver ion" refers to Ag(I) ion.

As used herein, "fabric" means a woven or nonwoven textile such as cotton, polyester, nylon, lycra, polyolefin and blends thereof.

The use of the term "(meth)" followed by another term such as acrylic, acrylate, acrylamide, etc., as used herein and in the appended claims, refers to, for example, both acrylic and (meth)acrylic; acrylate and methacrylate; acrylamide and methacrylamide; etc. Additionally any acids referenced herein also include the salt form and vice versa.

Unless otherwise specified, references to percentages are percentages by weight or ppm w/w. All range endpoints are inclusive and combinable.

The aqueous compositions of the present disclosure are useful for providing one or more properties or benefits (e.g., antimicrobial activity and/or odor control) to fibers or articles, particularly textiles, such as fabrics.

The aqueous composition comprises (a) silver ion, (b) at least one polymer comprising at least 10 wt% polymerized units of vinylimidazole, and (c) at least one surfactant represented by the formula

R¹-O-[CH₂CH(R²)-O]ₓ [CH₂CH₂O]_{y}-H,

wherein R¹, R², x and y are as described herein.

The at least one polymer may comprise up to about 100 wt% polymerized units of vinylimidazole; preferably at least 15 wt%, more preferably at least 20 wt%, most preferably at least 25 wt%, at least 30 wt%, or at least 35 wt%; preferably no more than 95 wt%, more preferably no more than 90 wt%, most preferably no more than 85 wt%. The polymer preferably further comprises from 10 to 70 wt% of one or more polar monomers; preferably at least 15 wt%; more preferably at least 20 wt%; preferably no more than 60 wt%, more preferably no more than 55 wt%. Polar monomers preferably are monomers having at least one carboxyl group, sulfonic acid group, phosphonic acid group or having polymerized units of ethylene oxide. Preferred polar monomers include, e.g., acrylic acid (AA), methacrylic acid (MAA), itaconic acid, maleic acid, fumaric acid, salts and alkyl or hydroxyalkyl (e.g., C1-C22) esters of the foregoing acids, 2-acrylamido-2-methylpropanesulfonic acid and its sodium salt, (meth)acrylate esters of polymerized ethylene oxide units or mixed ethylene/propylene oxide units, provided that ethylene oxide residues are at least 50 wt% of the ethylene/propylene oxide residues (alternatively at least 75%, alternatively at least 90%), and combinations thereof. Preferably, the ethylene oxide units or mixed ethylene/propylene oxide units are monoalkylated (e.g., polyethylene glycol monomethyl ether) and have Mn of at least 150, preferably at least 300; preferably no more than 1000, preferably no more than 700, preferably no more than 600. The polymer may be an "acrylic polymer," i.e., a polymer having at least 30 wt% polymerized units of acrylic monomers, preferably at least 35 wt%, preferably at least 40 wt%, preferably at least 50 wt%. Acrylic monomers include (meth)acrylic acids, their salts and their C1-C22 alkyl or hydroxyalkyl esters, including combinations thereof; crotonic acid, itaconic acid, fumaric acid, maleic acid, maleic anhydride, (meth)acrylamides, (meth)acrylonitrile and alkyl or hydroxyalkyl esters of crotonic acid, itaconic acid, fumaric acid or maleic acid.

In a preferred embodiment, the at least one polymer comprises, in addition to the polymerized units of vinylimidazole (and, in some embodiments, in addition to polymerized units of (meth)acrylic acid), polymerized units of other ethylenically unsaturated monomers, e.g., (meth)acrylate esters, vinyl esters, (meth)acrylamides. In a preferred embodiment, the polymer comprises from 0 to 70 wt% polymerized units of alkyl or hydroxyalkyl (meth)acrylates; preferably no more than 60 wt%, more preferably no more than 55 wt%; preferably at least 5 wt%, more preferably at least 10 wt%. Preferred alkyl groups include C₁-C₈ alkyl groups, more preferably C₁-C₆, most preferably C₁-C₄. Preferred hydroxyalkyl groups include C₂-C₆ hydroxyalkyl groups, more preferably C₂-C₄.

In a preferred embodiment, the polymer comprises (x) 60-90 wt% polymerized units of vinylimidazole, and (y) 10-40 wt% polymerized units of a monomer Y which is an ethylenically unsaturated compound. Monomer Y may be selected, for example, from carboxylic acids, organosulfuric acids, sulfonic acids, phosphonic acids and esters (e.g., (meth)acrylate esters) of polymerized units of ethylene oxide or mixed ethylene/propylene oxide units, provided that ethylene oxide residues are at least 50 wt% of the ethylene/propylene oxide residues (alternatively at least 75%, alternatively at least 90%) or that the esters of mixed ethylene/propylene oxide residues are no more than 20 wt% of the copolymer, alternatively no more than 15%, alternatively no more than 10%. Preferably, the esters of polymerized units of ethylene oxide or mixed ethylene/propylene oxide units comprise at least 2 units of ethylene oxide, alternatively at least 3, alternatively at least 4, alternatively at least 5, alternatively at least 6. The number of polymerized ethylene oxide units or mixed ethylene/propylene oxide units is calculated from the Mn of the polymerized ethylene oxide or mixed ethylene/propylene oxide chain. Preferably, the esters of polymerized units of ethylene oxide or mixed ethylene/propylene oxide are (meth)acryloyl esters. The polymerized units of ethylene oxide or mixed ethylene/propylene oxide may be capped with a C1-C6 alkyl group on one end. In some embodiments, polymerized units of ethylene oxide or mixed ethylene/propylene oxide have Mn from 100 to 3000, such as from 200 to 1000, from 250 to 600, or from 300 to 500. In some embodiments, monomer Y is selected from acrylic acid (AA), methacrylic acid (MAA), itaconic acid, maleic acid, fumaric acid, 2-acrylamido-2-methylpropanesulfonic acid and its sodium salt and combinations thereof. In some aspects of these embodiments, the polymer further comprises other ethylenically unsaturated monomers, e.g., (meth)acrylate esters, vinyl esters, (meth)acrylamides.

More than one polymer may be combined in the compositions of the present disclosure, such as first and second polymers, each of the first and second polymers, for example, comprising polymerized units of vinylimidazole. In a preferred embodiment, the composition comprises a first polymer comprising (x) 60-90 wt% polymerized units of vinylimidazole, and (y) 10-40 wt% polymerized units of a monomer Y which is an ethylenically unsaturated compound, such as described above, and the composition further comprises a second polymer comprising: (w) polymerized units of vinylimidazole, and (z) polymerized units of a monomer Z, wherein monomer z is a non-heterocyclic saturated compound selected from acrylic acid, (meth)acrylic acid, ethyl acrylate, butyl acrylate and combinations thereof (i.e., a combination of acrylic monomers). The second polymer may comprise the monomer vinylimidazole and the monomer Z in a weight ratio of 95:5 to 5:95, alternatively 80:20 to 20:80, alternatively 60:40 to 40:60. Polymerized units of vinylimidazole may be present in the second polymer in an amount, for example, from about 10 wt% to about 90 wt%, alternatively from about 10 wt% to about 65 wt%, further alternatively from about 20 wt% to about 50 wt%. Polymerized units of monomer Z may be present in the second polymer in an amount, for example, from about 10 wt% to about 90 wt%, alternatively from about 35 wt% to about 90 wt%, further alternatively from about 50 wt% to about 80 wt%. For example, butyl acrylate (BA) may be present in the second polymer in an amount from about 5 wt% to about 60 wt%, alternatively from about 5 wt% to about 45 wt%, and further alternatively from about 5 wt% to about 25 wt%. Acrylic acid (AA) may further be present in the copolymer, for example, in an amount from about 5 wt% to about 30 wt%, alternatively from about 5 wt% to about 20 wt%, further alternatively from about 5 wt% to about 10 wt%.

Preferably, the polymer has a number-average molecular weight (Mn) from 1000 to 300,000; preferably at least 5000, preferably at least 10000; preferably no more than 200000, preferably no more than 100000, preferably no more than 50000.

Methods for preparing the types of polymers described herein are known in the art.

Preferably, the molar ratio of vinylimidazole to silver ion in the present compositions is at least 3.5:1, preferably at least 4:1, preferably at least 5:1, preferably at least 8:1; preferably at least 12:1, preferably no more than 150:1, preferably no more than 100:1, preferably no more than 50: 1, preferably no more than 24:1. When vinylimidazole is present in multiple polymers in the composition, the total amount of vinylimidazole from all such sources is considered for the ratio of vinylimidazole to silver ion in the composition. Preferably, the source of silver ion is a water-soluble silver salt, e.g., silver nitrate, silver/amine complexes, silver acetate, etc.

The surfactant of the present disclosure is represented by the formula:

R¹-O-[CH₂CH(R²)-O]ₓ [CH₂CH₂O]_{y}-H,

wherein R¹ is a C₆₋₁₀ branched or linear alkyl, R² is CH₃ or CH₂CH₃, x is a real number from about 1 to about 11, preferably from about 3 to about 6, and y is a real number from about 1 to about 20, preferably from about 3 to about 14, from about 6 to about 14, or from about 6 to about 11.

It is understood that "x" and "y" represent average degrees of, respectively, propoxylation and/or butoxylation (depending on the identity of R²) and ethoxylation. Thus, x and y need not be whole numbers, which is intended to be illustrated by use of "about." Taken together, x and y establish a degree of alkoxylation in an oligomer distribution. It is to be understood that the order of x and y is block or random. Preferably, the PO or BO portion, and EO portion are the result of a block feed.

Preferred surfactants of the presently disclosed formula are those in which x is about 3, about 4, about 5 or about 6, more preferably about 5.

Preferably, y is about 6, about 9, about 11 or about 14, more preferably about 9.

R¹ is preferably a C₆₋₁₀ branched alkyl, more preferably a C₈₋₉ branched alkyl, such as 2-ethylhexyl or 2-propylhexyl, most preferably 2-ethylhexyl.

R² is preferably CH₃.

For example, preferred surfactants include those wherein x is about 3, about 4, about 5 or about 6, more preferably about 5; y is about 3, about 6, about 9, about 11 or about 14, more preferably about 6 or about 9, most preferably about 9; R¹ is a C₈₋₉ branched alkyl, such as 2-ethylhexyl; and R² is CH₃. More preferred are those wherein x is about 5, y is about 9, R¹ is 2-ethylhexyl and R² is CH₃.

Preferably, the HLB value of the surfactant is between about 8 and 15, more preferably between about 9 and 14 or between about 10 and 14, such as about 12.5, as calculated using methods described in "Calculation of Hydrophile-Lipophile balance for polyethoxylated surfactants by group contribution method," Xiaowen Guo; Zongming Rong; Xugen Ying; Journal of Colloid and Interface Science 298 (2006) 441-450.

The surfactants in accordance with the present disclosure are available commercially or can be prepared by methods known in the art.

The aqueous composition of the present disclosure may be in a concentrated form, such as intended for dilution before treatment of fibers or articles. Alternatively, the aqueous composition may be in the form of a treatment or working composition or solution, such as after dilution of a concentrated form, or otherwise prepared in a form ready for treatment.

The compositions of the present disclosure are described as "aqueous," which means that the recited components of the composition are comprised in water or a water-based medium, such as a mixture composed substantially of water and water miscible solvent(s), including buffered aqueous solutions.

A concentrated form of the aqueous composition may have a concentration of silver of, for example, from about 20 ppm to about 100,000 ppm, alternatively from about 20 ppm to about 50,000 ppm, from about 30 ppm to about 35,000 ppm, from about 50 ppm or from about 100 ppm to about 25,000 ppm or from about 100 ppm to about 15,000 ppm, to about 10,000 ppm or to about 5,000 ppm. Preferably, the concentrated composition contains at least 50 ppm or at least 100 ppm silver. The concentrated form may comprise the vinylimidazole-containing polymer(s) in a concentration of, for example, from about 0.1 wt% to about 15 wt%, alternatively from about 0.3 wt% to about 13 wt%, or from about 0.5 wt% to about 6 wt%. The concentrated form of the composition may comprise the at least one surfactant of the present disclosure in a concentration of, for example, from about 0.2 wt% to about 5 wt%, alternatively from about 0.4 wt% to about 3 wt%, from about 0.4 wt% to about 5 wt% or to about 2.5 wt% or from about 0.6 wt% to about 2 wt%. The concentrated form preferably has a pH ranging from about 5 to about 11.5, such as from about 8 to about 11. Preferably, in the concentrated form, y in the formula for the presently disclosed surfactant is from about 4 to about 14, more preferably from about 6 to about 14 or from about 6 to about 11.

The aqueous composition may be in the form of a treatment or working composition or solution (e.g., after dilution of a concentrated form) having a concentration of silver of, for example, from about 0.5 to about 200 ppm or to about 180 ppm, alternatively from about 5 ppm or from about 10 ppm to about 180 ppm, to about 160 ppm or to about 140 ppm, alternatively from about 10 ppm or from about 20 ppm to about 120 ppm or from about 10 ppm or from about 20 ppm to about 80 ppm. Preferably, the treatment or working composition comprises a concentration of silver of at least 2 ppm, alternatively at least 5 ppm or at least 10 ppm; preferably no more than 160 ppm, alternatively no more than 120 ppm or no more than 100 ppm. The treatment or working composition may comprise the vinylimidazole-containing polymer(s) in a concentration of, for example, from about 0.004 wt% to about 1.5 wt%, alternatively from about 0.01 wt% to about 1 wt% or to about 0.5 wt%, or from about 0.01 wt% to about 0.3 wt%. The treatment or working composition may comprise the at least one surfactant of the present disclosure in a concentration of, for example, from about 0.001 wt% to about 1 wt%, alternatively from about 0.004 wt% to about 0.75 wt% or to about 0.5 wt%, alternatively from about 0.01 wt% to about 0.5 wt% or from about 0.05 wt% to about 0.35 wt%. Preferably, the treatment or working composition has a pH ranging from about 4 to about 11, such as from about 5.5 to about 10.5. In some embodiments, the treatment or working composition comprises water having a hardness characterized by a conductivity value of at least 100 µS/cm, alternatively at least 150 µS/cm, at least 180 µS/cm, at least 200 µS/cm, at least 220 µS/cm, at least 250 µS/cm, at least 300 µS/cm, at least 350 µS/cm, at least 400 µS/cm, at least 440 µS/cm, at least 480 µS/cm, at least 520 µS/cm, at least 560 µS/cm or at least 600 µS/cm. Conductivity measures the ability of water to conduct electricity, which depends on the total concentration of dissolved ions. Hard water contains high levels of ionic materials, which may include calcium and magnesium ions, and other ions such as bicarbonates, chlorides and sulfates, which increase conductivity. Increased ion concentration generally correlates to higher conductivity. The treatment or working composition may comprise water having a hardness characterized by a conductivity value ranging, for example, up to 2500 µS/cm, alternatively up to 2000 µS/cm, alternatively up to 1800 µS/cm, alternatively up to 1400 µS/cm, alternatively up to 1250 µS/cm, or alternatively up to 1150 µS/cm.

In a further aspect of the present disclosure, a method of preparing a composition useful in the treatment of fibers or an article, such as a textile, comprises combining in an aqueous medium (a) a source of silver ion, (b) at least one polymer comprising at least 10 wt% polymerized units of vinylimidazole and (c) at least one surfactant represented by the formula:

R¹-O-[CH₂CH(R²)-O]ₓ [CH₂CH₂O]_{y}-H,

wherein R¹, R², x and y are as described herein. It is understood that the foregoing descriptions relating to the above components (a), (b) and (c) also apply to the present preparation method.

The compositions of the present disclosure are not limited to any particular technique for combining the stated components. Methods for preparing aqueous compositions comprising silver ion and the polymer(s) of the present disclosure are known in the art. The surfactant of the present disclosure may be combined with such components, for example, at or around the time polymer materials are combined with one another (if more than one polymer is used) and/or at or around the time that a source of silver ion is combined with one or more polymers. Further, the surfactant of the present disclosure may be added to a composition already containing a source of silver ion and one or more polymers. Similarly, the surfactant may be added to a treatment or working composition or solution already containing a source of silver ion and one or more polymers, such as at a textile treatment facility. Preferably, a source of silver ion is a water-soluble silver salt, e.g., silver nitrate, silver/amine complexes, silver acetate, etc., often in the form of a silver solution, such as silver nitrate in water, aqueous buffered solutions or aqueous/organic solutions made with water miscible solvents.

In a further aspect, a method for treating fibers or an article, such as a textile, comprises contacting the fibers or article with a composition of the present disclosure. As used herein, a "fiber" refers to a unit of matter which is capable of being spun into a yarn or made into a fabric by bonding or by interlacing in a variety of ways, including, for example, weaving, knitting, braiding, felting, twisting, or webbing. The article may be a textile, such as a fabric, e.g., cotton, polyester, nylon and combinations thereof. The fibers or article may be contacted with a composition of the present disclosure in accordance with known techniques, including, without limitation, padding, exhaustion, spraying, brushing, dipping, or coating.

As used herein, the articles "a", "an", and "the" preceding an element or component of the invention are intended to be nonrestrictive regarding the number of instances (i.e., occurrences) of the element or component. Therefore "a", "an", and "the" should be read to include one or at least one, and the singular word form of the element or component also includes the plural unless the number is obviously meant to be singular.

As used herein, the term "comprising" means the presence of the stated features, integers, steps, or components as referred to in the claims, but that it does not preclude the presence or addition of one or more other features, integers, steps, components or groups thereof. The term "comprising" is intended to include embodiments encompassed by the terms "consisting essentially of" and "consisting of". Similarly, the term "consisting essentially of" is intended to include embodiments encompassed by the term "consisting of".

As used herein, and unless otherwise indicated, the term "about" modifying the quantity of an ingredient or reactant employed refers to variation in the numerical quantity that can occur, for example, through typical measuring and liquid handling procedures used for making concentrates or use solutions in the real world; through inadvertent error in these procedures; through differences in the manufacture, source, or purity of the ingredients employed to make the compositions or carry out the methods; and the like.

Where present, all ranges are inclusive and combinable. For example, when a range of "1 to 5" is recited, the recited range should be construed as including ranges "1 to 4", "1 to 3", "1-2", "1-2 & 4-5", "1-3 & 5", and the like.

When a parameter is given either as a range, preferred range, or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. The scope of the invention is not intended to be limited to the specific values and examples as recited in the specification.

### EXAMPLES

### Examples 1-4

Sample aqueous compositions in a concentrated form were blended, each composition containing a first polymer (45VI/40BA/15AA w/w/w), a second polymer (75VI/25PEGMA w/w) and silver ion from a source of silver which was silver nitrate. The concentration of silver ion in each sample was approximately 1000 ppm, and the VI to silver ion molar ratio was approximately 8:1 in Samples 1 and 2 and approximately 12:1 in Samples 3-5. The samples were prepared in deionized water with a small amount of ammonium hydroxide to control pH to 10.5-11.5. The samples were prepared with or without a Surfactant A of the following formula at the weight percentages shown in the following Table 1.

Surfactant A: R¹-O-[CH₂CH(R²)-O]ₓ [CH₂CH₂O]_{y}-H, where R¹: 2-ethylhexyl, R²: CH₃, x: 5 and y: 9; (HLB value: 12.5).

**Table 1**

| | Sample compositions (concentrated form) | | | | |
|---|---|---|---|---|---|
| | Sample 1 | Sample 2 | Sample 3 | Sample 4 | Sample 5 |
| Surf. A (wt%) | - | 0.81 | 1.44 | 0.81 | 0.36 |

### Example 1

Individual working solutions were prepared using Samples 1 and 2 above by adding in each case 6 grams of the sample to 94 grams of tap water having a hardness level characterized by a conductivity value of 440 µS/cm using a conductivity meter (Oakton PC 450). The pH of each working solution was ≈ 10.3. The working solutions were prepared in triplicate (three working solutions prepared using Sample 1 and three prepared using Sample 2) and the results discussed below reported on average.

Each working solution was visually observed for the formation of flocculants by adding 50 ml of the working solution to a glass jar at 35-37°C with continuous shaking. The sample working solutions were observed for the formation of flocculants at 5 minutes and 20 minutes. The degree of flocculant formation is indicated in Table 2 below where the number of "+" symbols represents a higher degree of flocculant formation. All working solutions that contained the Surfactant A had no or very little flocculation.

**Table 2**

| Working Solution (6 wt% Sample #) | Surf. A (wt%) | Flocculant (5 min) | Flocculant (20 min) |
|---|---|---|---|
| Sample 1 (Comp.) | - | ++++ | ++++ |
| Sample 2 | 0.049 | none | none |

### Example 2

Each working solution from Example 1 (water hardness characterized by a conductivity of 440 µS/cm) was also assessed for foam formation and dissipation by adding 20 grams of the working solution in a 40 ml vial and shaking vigorously for 30 seconds. The foam formation was measured based on the foam height (cm) in the vial and then measured at 5 minutes and 10 minutes to determine the foam dissipation (% foam reduction). The results are shown in Table 3. A similar level of foam was initially generated in the working solutions with and without the Surfactant A; however, the foam advantageously dissipated much faster in the working solutions containing the Surfactant A.

**Table 3**

| Working Solution (6 wt% Sample #) | Surf. A (wt%) | Initial foam height (cm) | Foam reduction (%) after 5 min | Foam reduction (%) after 10 min |
|---|---|---|---|---|
| Sample 1 (Comp.) | - | 6.4 | 28.9 | 61.7 |
| Sample 2 | 0.049 | 7.1 | 74.4 | 83.2 |

### Example 3

Individual working solutions were prepared using Samples 3-5 above (which contained the Surfactant A) and, separately, using Sample 1 (which did not contain the Surfactant A) by adding in each case 6 grams of the sample to 94 grams of tap water having a hardness level characterized by a conductivity value of 600 µS/cm using a conductivity meter (Oakton PC 450), and, separately, to 94 grams of deionized (DI) water with pH adjusted dropwise with glacial acetic acid. The pH values of the hard water solutions and deionized water solutions were approximately 10.3 and 5.5, respectively. The working solutions were mixed and were observed for the formation of precipitates after two weeks for the hard water solutions and after one week for the deionized water solutions. The presence of the Surfactant A enabled the working solutions to remain stable, both with hard water at high pH and with deionized water at lower pH. The results are summarized in Table 4.

**Table 4**

| Working Solution (6 wt% Sample #) | Surf. A (wt%) | Hard water solution (pH ≈ 10.3) Observation (after 2 weeks) | DI water solution (pH ≈ 5.5) Observation (after 1 week) |
|---|---|---|---|
| Sample 3 | 0.086 | Slight haze with no precipitates | Opaque with no precipitates |
| Sample 4 | 0.049 | Slight haze with no precipitates | Opaque with no precipitates |
| Sample 5 | 0.022 | Slight haze with no precipitates | Opaque with no precipitates |
| Sample 1 (Comp.) | - | Slight haze with flocculants forming on top within 8 hours | Opaque with flocculants forming on top within 8 hours |

### Example 4

Each working solution from Example 3 (water hardness characterized by a conductivity of 600 µS/cm) was assessed for foam formation and dissipation by adding 20 grams of the working solution in a 40 ml vial and shaking vigorously for 30 seconds. The foam formation was measured based on the foam height (cm) in the vial and then measured at 10 minutes to determine the foam dissipation (foam reduction %). The results are shown in Table 5. The working solutions containing the Surfactant A quickly dissipated the foam, both with hard water at high pH and with deionized (DI) water at lower pH.

**Table 5**

| | | Hard water solution (pH ≈ 10.3) | | DI water solution (pH ≈ 5.5) | |
|---|---|---|---|---|---|
| Working Solution (6 wt% Sample #) | Surf. A (wt%) | Initial foam height (cm) | Foam reduction (%) after 10 min | Initial foam height (cm) | Foam reduction (%) after 10 min |
| Sample 3 | 0.086 | 3.0 | 56.7 | 3.0 | 83.3 |
| Sample 4 | 0.049 | 1.0 | 60.0 | 1.2 | 75.0 |
| Sample 5 | 0.022 | 2.0 | 75.0 | 1.0 | 90.0 |

### Example 5-6

Sample aqueous compositions in a concentrated form (Samples 6-11) were blended, each composition containing a first polymer (45VI/40BA/15AA w/w/w), a second polymer (75VI/25PEGMA w/w) and silver ion from a source of silver which was silver nitrate. The concentration of silver ion in each sample was approximately 1000 ppm, and the VI to silver ion molar ratio was approximately 8:1. The samples were prepared in deionized water with a small amount of ammonium hydroxide to control pH to 10.5-11.5. Samples were prepared with and without various surfactants identified below at the weight percentages provided in Table 6.

Surfactant A: R¹-O-[CH₂CH(R²)-O]ₓ [CH₂CH₂O]_{y}-H, where R¹: 2-ethylhexyl, R²: CH₃, x: 5, y: 9 (HLB value: 12.5).

### Surfactant W:

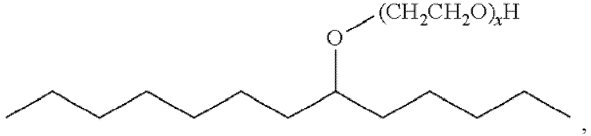

where x: 5 (HLB value: 10.5).

Surfactant X: the formula of Surfactant W, where x: 7 (HLB value: 12.1).

Surfactant Y: the formula of Surfactant W, where x: 9 (HLB value: 13.3).

Surfactant Z: CH₃(CH₂)ₙ-O-(CH₂CH₂O)₇-H, where n: C₁₂-C₁₅ linear alkyl (HLB value: 12.2).

### Example 5

20 grams of each sample were added to a 40 ml vial and shook to assess the resulting foam height. In addition, the physical state of each sample composition was visually assessed after storing overnight at 4°C. The results are shown in Table 6. The concentrated composition containing Surfactant A (Sample 7) remained clear and generated significantly less foam as compared to the concentrated compositions containing the other surfactants despite the other surfactants having similar HLB values. The composition containing Surfactant W, while generating little foam, phase separated after the overnight storage at 4°C.

**Table 6**

| Concentrated compositions | Surf. (wt%) | Foam height (cm) | Solution physical state |
|---|---|---|---|
| Sample 6 (Comp.) | - | 0.1 | Slightly opaque |
| Sample 7 | Surf. A (0.9 wt%) | 1.0 | Clear |
| Sample 8 (Comp.) | Surf. W (1.0 wt%) | 0.5 | Cloudy with phase separation |
| Sample 9 (Comp.) | Surf. X (1.0 wt%) | 3.0 | Clear |
| Sample 10 (Comp.) | Surf. Y (1.0 wt%) | 2.7 | Clear |
| Sample 11 (Comp.) | Surf. Z (0.95 wt%) | 3.2 | Crystallization |

### Example 6

Individual working solutions were prepared using Samples 6-11 above before storage by adding in each case 6 grams of the sample to 94 grams of tap water at two different hardness levels characterized by conductivity values of 641 µS/cm and 1107 µS/cm, respectively, measured using a conductivity meter (Oakton PC 450). The pH of each working solution was ≈ 10.3. Each working solution was visually observed for the formation of flocculants by adding 50 ml of the working solution to a glass jar at 35-37°C with continuous shaking. The sample working solutions were observed for the formation of flocculants at 20 minutes. The degree of flocculant formation is indicated in Table 7 below where the number of "+" symbols represents a higher degree of flocculant formation. As shown in Table 7, the Surfactant A provided greater protection against the formation of flocculants while also generating the least amount of foam as compared to the other surfactants, despite the similar HLB values of these surfactants.

**Table 7**

| Working Solution (6 wt% Sample #) | Surf. (wt. %) | Foam initial (cm) | Foam reduction after 5 min shaking (%) | Foam reduction after 10 min shaking (%) | Degree of Flocculants |
|---|---|---|---|---|---|
| | **Water hardness 641 µS/cm** | | | | |
| Sample 6 (Comp.) | - | 2.0 | 50.0 | 75.0 | +++++ |
| Sample 9 (Comp.) | Surf. X (0.06 wt. %) | 2.5 | 20.0 | 40.0 | ++ |
| Sample 10 (Comp.) | Surf. Y (0.06 wt. %) | 2.8 | 21.4 | 28.6 | +++ |
| Sample 7 | Surf. A (0.054 wt.%) | 0.8 | 75.0 | 87.5 | + |
| Sample 11 (Comp.) | Surf. Z (0.057 wt. %) | 2.8 | 10.7 | 17.9 | +++ |

| | **Water hardness 1107 µS/cm** | | | | |
|---|---|---|---|---|---|
| Sample 6 (Comp.) | - | 2.0 | 50.0 | 75.0 | +++++ |
| Sample 9 (Comp.) | Surf. X (0.06 wt. %) | 2.3 | 21.7 | 43.5 | ++++ |
| Sample 10 (Comp.) | Surf. Y (0.06 wt. %) | 3.0 | 6.7 | 23.3 | ++++ |
| Sample 7 | Surf. A (0.054 wt.%) | 0.6 | 50.0 | 100.0 | + |
| Sample 11 (Comp.) | Surf. Z (0.057 wt. %) | 3.2 | 15.6 | 15.6 | + |

### Example 6

Sample aqueous compositions in a concentrated form (Samples 12-15) were blended, each composition containing a first polymer (45VI/40BA/15AA w/w/w), a second polymer (75VI/25PEGMA w/w) and silver ion from a source of silver which was silver nitrate. The concentration of silver ion in each sample was approximately 1000 ppm, and the VI to silver ion molar ratio was approximately 8:1. The samples were prepared in deionized water with a small amount of ammonium hydroxide to control pH to 10.5-11.5. Samples were prepared with and without surfactants at the weight percentages provided below in Table 8. Surfactant A: R¹-O-[CH₂CH(R²)-O]ₓ [CH₂CH₂O]_{y}-H, where R¹: 2-ethylhexyl, R²: CH₃, x: 5, y: 9 (HLB value: 12.5).

Surfactant B: the formula of Surfactant A where R¹: 2-ethylhexyl, R²: CH₃, x: 5 and y: 6 (HLB value: 10.8). Surfactant C: the formula of Surfactant A where R¹: 2-ethylhexyl, R²: CH₃, x: 5 and y: 3 (HLB value: 7.9). The physical state of each sample composition was visually assessed after storing at 8 hours at room temperature. The results are shown in Table 8. The concentrated compositions containing Surfactants A and B (Samples 13 and 14, respectively) were clear. The concentrated composition containing Surfactant C phase separated, indicating that preferred values for y in the formula for the presently disclosed surfactant are above 3 when using the surfactant in a concentrated form of the presently disclosed aqueous composition.

**Table 8**

| Concentrated compositions | Surf. (wt%) | Solution physical state |
|---|---|---|
| Sample 12 (Comp.) | - | Slightly hazy |
| Sample 13 | Surf. A (0.9 wt%) | Clear |
| Sample 14 | Surf. B (0.9 wt%) | Clear |
| Sample 15 | Surf. C (0.9 wt%) | Cloudy with phase separation |

### Example 7

Individual working solutions were prepared using Samples 12-15 above before storage by adding in each case 6 grams of the sample to 94 grams of tap water having a hardness level characterized by a conductivity value of 440 µS/cm. The pH of each working solution was ≈ 10.3. Each working solution was visually observed for the formation of flocculants by adding 50 ml of the working solution to a glass jar at 35-37°C with continuous shaking. The sample working solutions were observed for the formation of flocculants at 20 minutes. The degree of flocculant formation is indicated in Table 9 below where the number of "+" symbols represents a higher degree of flocculant formation. As shown in Table 9, the Surfactants A, B and C provided significant protection against the formation of flocculants in the working solutions.

**Table 9**

| Working Solution (6 wt% Sample #) | Surf. (wt. %) | Degree of Flocculants (20 mins) |
|---|---|---|
| Sample 12 (Comp.) | - | +++++ |
| Sample 13 | Surf. A (0.054 wt.%) | + |
| Sample 14 | Surf. B (0.054 wt.%) | + |
| Sample 15 | Surf. C (0.054 wt.%) | + |

## Claims

1. An aqueous composition comprising: (a) silver ion; (b) at least one polymer comprising at least 10 wt% polymerized units of vinylimidazole; and (c) at least one surfactant represented by the formula:
R¹-O-[CH₂CH(R²)-O]ₓ [CH₂CH₂O]_{y}-H,
wherein R¹ is a C₆₋₁₀ branched or linear alkyl, R² is CH₃ or CH₂CH₃, x is a real number from about 1 to about 11, and y is a real number from about 1 to about 20.

2. The aqueous composition of claim 1, wherein the at least one polymer comprises at least 20 wt% polymerized units of vinylimidazole.

3. The aqueous composition of claim 1 or 2, wherein the aqueous composition has a molar ratio of vinylimidazole to silver ion of at least 3.5:1.

4. The aqueous composition of any preceding claim, wherein the at least one polymer further comprises from about 10 to about 70 wt% of one or more polar monomers.

5. The aqueous composition of any preceding claim, wherein R¹ is a C₈₋₉ branched alkyl, R² is CH₃, x is from about 3 to about 6, and y is from about 6 to about 14.

6. The aqueous composition of claim 5, wherein R¹ is 2-ethylhexyl, x is about 5 and y is about 9.

7. The aqueous composition of any preceding claim, wherein the aqueous composition is in a concentrated form having a concentration of silver of from about 50 ppm to about 25,000 ppm, and wherein y is from about 6 to about 14.

8. The aqueous composition of any preceding claim, wherein the aqueous composition is in a concentrated form having a concentration of the at least one surfactant from about 0.2 wt% to about 5 wt%, preferably wherein the concentration of the at least one surfactant is from about 0.4 wt% to about 3 wt%.

9. The aqueous composition of any one of claims 1-6, wherein the aqueous composition has a concentration of silver of from about 10 ppm to about 200 ppm.

10. The aqueous composition of any one of claims 1-6 and 9, wherein the aqueous composition has a concentration of the at least one surfactant of from about 0.001 wt% to about 1 wt%, preferably wherein the concentration of the at least one surfactant is from about 0.004 wt% to about 0.5 wt%.

11. The aqueous composition of any one of claims 1-6, 9, and 10, wherein the aqueous composition comprises water having a hardness **characterized by** a conductivity value of at least 100 µS/cm.

12. The aqueous composition of claim 11, wherein the aqueous composition comprises water having a hardness **characterized by** a conductivity value of at least 250 µS/cm.

13. The aqueous composition of claim 11, wherein the aqueous composition comprises water having a hardness **characterized by** a conductivity value of at least 400 µS/cm, preferably wherein the conductivity value is at least 600 µS/cm.

14. A method of preparing the aqueous composition according to any preceding claim, comprising combining in an aqueous medium (a) a source of silver ion, (b) the at least one polymer, and (c) the at least one surfactant.

15. A method for treating fibers or an article, comprising contacting the fibers or article with the aqueous composition of any one of claims 1-6 and 9-13.
